# EUROPEAN PATENT APPLICATION

(11) **EP 4 096 006 A1**
(43) Date of publication of application: **30.11.2022**
(21) Application number: 21842474.5
(22) Date of filing: 13.07.2021
(51) Int. Cl.: H01M 50/308, H01M 50/35, H01M 50/578, H01M 50/502, H01M 50/20

(54) **BATTERY MODULE HAVING VENTING HOLE TERMINAL, AND BATTERY PACK AND VEHICLE INCLUDING SAME**

(30) Priority: 14.07.2020 KR 20200086932
(71) Applicant: LG Energy Solution, Ltd., Seoul 07335 (KR)
(72) Inventor: YOON, Doo-Han, Daejeon 34122 (KR)
(74) Representative: Plasseraud IP
(86) International application number: PCT/KR2021/008995
(87) International publication number: WO 2022/015030

(57) **Abstract**

A battery module according to an embodiment of the present disclosure includes: a cell stack including a plurality of battery cells that are electrically connected to one another; a module housing accommodating the cell stack therein and including a pair of module holes formed in one surface; and a pair of venting hole terminals each including terminal hole communicating with the module hole, and electrically connected to the cell stack.

## Description

### TECHNICAL FIELD

The present disclosure relates to a battery module including a venting hole terminal, and a battery pack and a vehicle including the battery module, and more particularly, to a battery module including a venting hole terminal that may function as both a venting hole and a module terminal, and a battery pack and a vehicle including the battery module.

The present application claims priority to Korean Patent Application No. 10-2020-0086932 filed on July 14, 2020 in the Republic of Korea, the disclosures of which are incorporated herein by reference.

### BACKGROUND ART

In a battery module included in a battery pack used in an electric vehicle or a hybrid vehicle, a plurality of battery cells are generally electrically connected to one another by using a bus bar frame and a pair of module terminals are electrically connected to an outermost battery cell among the plurality of battery cells constituting a battery cell stack. Also, in the battery module, the pair of module terminals provided in the battery module are exposed to the outside of a module housing.

In general, this type of battery module itself does not include a separate venting structure. Accordingly, when cell venting occurs inside the battery module, it is necessary to form a separate venting hole in the module housing in order to provide a structure for discharging venting gas to the outside. However, when the venting hole is formed in the module housing, there is a risk of penetration of foreign materials and/or moisture.

Also, according to a conventional battery module structure, when a battery pack is manufactured by electrically connecting a plurality of battery modules, a separate process for connecting module terminals of adjacent battery modules by using a connecting bar is additionally required.

Accordingly, it is required to apply a venting structure capable of discharging venting gas and preventing penetration of external foreign materials and/or moisture to a battery module itself, and it is required to improve a battery module structure so as to simplify an electrical connection process between a plurality of battery modules.

### DISCLOSURE

### Technical Problem

The present disclosure is designed to solve the problems of the related art, and therefore the present disclosure is directed to applying a venting structure capable of discharging venting gas and preventing penetration of external foreign materials and/or moisture to a battery module itself, and simplifying an electrical connection process between a plurality of battery modules.

Technical problems to be solved by the present disclosure are not limited to the above-described technical problems and one of ordinary skill in the art will understand other technical problems from the following description.

### Technical Solution

In an aspect of the present disclosure, there is provided a battery module including: a cell stack including a plurality of battery cells that are electrically connected to one another; a module housing accommodating the cell stack therein and including a pair of module holes formed in one surface; and a pair of venting hole terminals each including terminal hole communicating with the module hole, and electrically connected to the cell stack.

One of the pair of venting hole terminals may be connected to a first electrode of the cell stack, and the remaining one of the pair of venting hole terminals may be connected to a second electrode of the cell stack.

The first electrode and the second electrode may have different polarities.

Each of the pair of venting holes terminal may include a conductive elastic member fixed to an inner circumferential surface of the terminal hole.

The battery module may further include a bus bar frame configured to connect the plurality of battery cells of the cell stack in series, in parallel, or in a combination of the two.

In another aspect of the present disclosure, there is also provided a battery pack including: a module assembly including a plurality of battery modules each including a cell stack including a plurality of battery cells that are electrically connected to one another, a module housing accommodating the cell stack therein and including a pair of module holes formed in one surface, and a pair of venting hole terminals each including terminal hole communicating with the module hole and electrically connected to the cell stack; a pack housing accommodating the module assembly therein and including at least one pack hole communicating with a receiving space of the module assembly; a fluid passage bracket fixed to one surface of an inner receiving space of the pack housing; and a plurality of venting hole studs each fixed to the fluid passage bracket and inserted into the module hole and the terminal hole.

Each of the plurality of venting hole studs may include a stud hole communicating with the module hole and the terminal hole.

The fluid passage bracket may include a plurality of bracket holes each communicating with the stud hole.

The fluid passage bracket may include a venting gas fluid passage formed in a longitudinal direction, wherein the venting gas fluid passage communicates with each of the plurality of bracket holes.

The venting gas fluid passage may communicate with the pack hole.

An insulating member may be located between the plurality of venting hole studs and the fluid passage bracket.

In another aspect of the present disclosure, there is also provided a vehicle including the battery module and/or the battery pack according to an embodiment of the present disclosure as described above.

### Advantageous Effects

According to an aspect of the present disclosure, in a battery module itself, venting gas may be discharged and penetration of external foreign materials and/or moisture may be prevented, and an electrical connection process between a plurality of battery modules may be simplified.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a conceptual view illustrating an internal structure of a battery module, according to an embodiment of the present disclosure.
FIG. 2 is a view illustrating a bottom surface of the battery module of FIG. 1.
FIG. 3 is a view illustrating a venting hole terminal applied to the present disclosure.
FIG. 4 is a perspective view illustrating a battery pack, according to an embodiment of the present disclosure.
FIG. 5 is a conceptual view illustrating an internal structure of the battery pack of FIG. 4.
FIG. 6 is a view illustrating a fluid passage bracket and a venting hole stud applied to the present disclosure.
FIG. 7 is a view illustrating a process of mounting the battery module by using the venting hole stud of the present disclosure.
FIG. 8 is a view illustrating an insulating member applied to the present disclosure.
FIG. 9 is a view illustrating a connection relationship between the fluid passage bracket and a pack hole applied to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

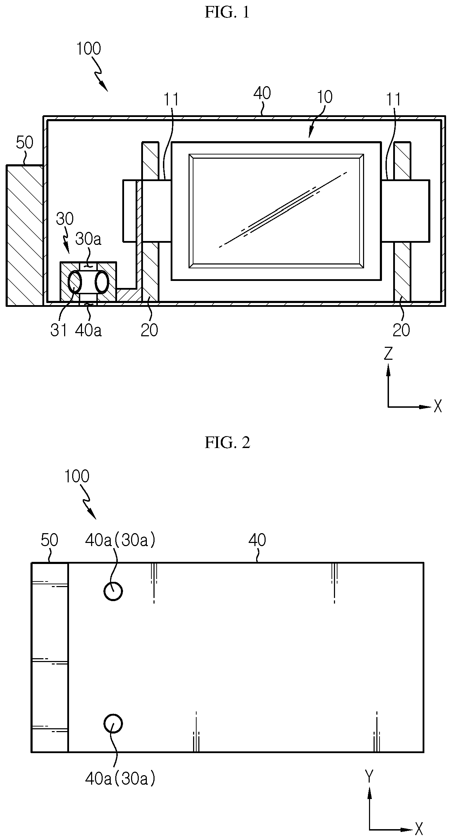

Referring to FIGS. 1 through 3, a battery module 100 according to an embodiment of the present disclosure will be described.

The battery module 100 includes a plurality of battery cells 10, a pair of venting hole terminals 30, and a module housing 40. The battery module 100 may further include a bus bar frame 20 for electrical connection between the plurality of battery cells 10. Also, the battery module 100 may further include an end plate 50 according to a shape of the module housing 40.

For example, a pouch-type battery cell may be used as the battery cell 10, and in this case, each battery cell 10 includes a pair of electrode leads 11 having opposite polarities. The plurality of battery cells 10 are stacked facing one each other to form one cell stack. The plurality of battery cells 10 may be connected to one another in series, in parallel, or in a combination of the two.

The bus bar frame 20 may be provided only on a side in a longitudinal direction of the cell stack (direction parallel to an X-axis), or may be provided on both one side and the other side in the longitudinal direction of the cell stack, according to whether the pair of electrode leads 11 provided in the battery cell 10 are drawn out in the same direction or in opposite directions. Although not shown specifically, the bus bar frame 20 includes at least one bus bar. The bus bar is used to connect the electrode leads 11 of adjacent battery cells.

In the battery module 100, the bus bar frame 20 may be omitted. That is, electrical connection between the plurality of battery cells 10 does not necessarily have to be made by the bus bar frame 20, but may be made by at least one bus bar, or may be made by directly contacting the electrode leads 11 of adjacent battery cells 10 without using a medium for electrical connection.

The venting hole terminal 30 is electrically connected to the cell stack, and is located on one surface of the module housing 40. The venting hole terminal 30 may be located, for example, on a bottom surface of the module housing 40. The venting hole terminal 30 includes a terminal hole 30a communicating with a module hole 40a passing through one surface of the module housing 40. A pair of venting hole terminals 30 are provided. One of the pair of venting hole terminals 30 is connected to a first electrode of the cell stack, and the remaining one is connected to a second electrode of the cell stack. The first electrode and the second electrode are electrodes having opposite polarities. For example, one of the pair of venting hole terminals 30 may be electrically connected to the cell stack by being coupled to the electrode lead 11 having a first polarity (hereinafter, referred to as a first electrode lead) from among the pair of electrode leads 11 provided in the outermost battery cell 10 located on one outermost side in a stack direction (direction parallel to a Y-axis). Likewise, the remaining one of the pair of venting hole terminals 30 may be electrically connected to the cell stack by being coupled to the electrode lead 11 having a second polarity (hereinafter referred to as a second electrode lead) opposite to the first polarity from among the pair of electrode leads 11 provided in the outermost battery cell 10 located on the other outermost side in the stack direction of the cell stack. Alternatively, the venting hole terminal 30 may be electrically connected to the cell stack through a bus bar (not shown) provided in the bus bar frame 20.

The pair of venting hole terminals 30 function as a positive electrode terminal and a negative electrode terminal of each battery module 100, and when gas is generated due to venting of the battery cell 10 in the module housing 40, function as a path for discharging the gas to the outside of the module housing 40.

The venting hole terminal 30 may be formed of a conductive metal material, and may have a hollow cylindrical shape having the terminal hole 30a formed in a height direction (direction parallel to a Z-axis). The venting hole terminal 30 may include a conductive elastic member 31 fixed to an inner circumferential surface of the terminal hole 30a. The conductive elastic member 31 may have a donut shape having a through-hole in a central portion, and, for example, a generally used contact spring may be used as the conductive elastic member 31. When an external terminal having a hollow tubular shape is inserted into the terminal hole 30a to electrically connect the plurality of battery modules 100, the conductive elastic member 31 presses and fixes an outer circumferential surface of the inserted terminal.

The cell stack, the bus bar frame 20, and the pair of venting terminals 30 are accommodated inside the module housing 40. The module housing 40 includes a pair of module holes 40a formed on both sides in a width direction of the bottom surface (direction parallel to the Y-axis), as described above. The pair of module holes 40a are formed at positions corresponding to the terminal holes 30a, and thus an inner space and an outer space of the module housing 40 communicate through the terminal holes 30a and the module holes 40a.

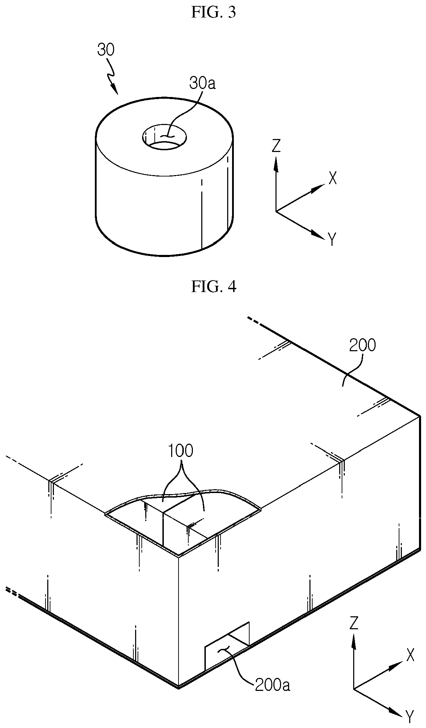

Next, a battery pack according to an embodiment of the present disclosure will be described with reference to FIGS. 4 through 9.

The battery pack according to an embodiment of the present disclosure includes a module assembly including a plurality of battery modules 100 according to an embodiment of the present disclosure, a pack housing 200, a fluid passage bracket 300, and a plurality of venting hole studs 400.

The pack housing 200 accommodates the module assembly, the fluid passage bracket 300, and the venting hole studs 400 therein. The pack housing 200 has at least one pack hole 200a through which venting gas is discharged from the battery module 100 to the outside. Although the pack hole 200a is formed only in a side surface of the pack housing 200 (surface parallel to an X-Z plane) in FIG. 4, a position of the pack hole 200a is not limited thereto.

The fluid passage bracket 300 extends in a width direction of the battery pack (direction parallel to the Y-axis), and includes an empty inner space, that is, a venting gas fluid passage P, through which venting gas may flow. The venting gas fluid passage P passes through between both ends of the fluid passage bracket 300 in a longitudinal direction.

The fluid passage bracket 300 functions as a bracket on which the plurality of battery modules 100 are mounted, and functions as a passage through which venting gas discharged from the battery module 100 flows. The fluid passage bracket 300 has a plurality of bracket holes 300a formed in a top surface in the longitudinal direction to function as a passage through which venting gas flows. Each of the plurality of bracket holes 300a communicates with the venting gas fluid passage P. The plurality of bracket holes 300a are formed at positions respectively corresponding to the plurality of module holes 40a formed in bottom surfaces of the plurality of battery modules 100 mounted on the fluid passage bracket 300.

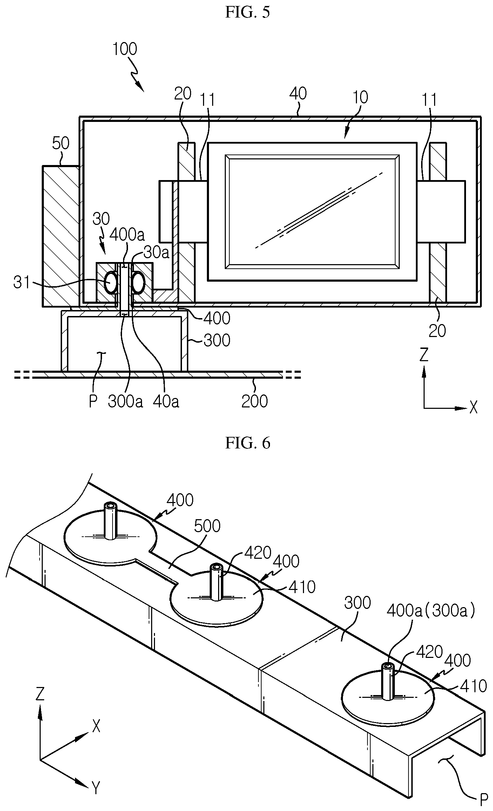

Referring to FIG. 6, the venting hole stud 400 is fixed on the fluid passage bracket 300, and is fixedly inserted into the module hole 40a and the terminal hole 30a to be electrically connected to the venting hole terminal 30. Accordingly, the venting hole stud 400 is electrically connected to the cell stack.

The venting hole stud 400 includes a base portion 410a coupled to a top surface of the fluid passage bracket 300, and an inserted portion 420a fixedly inserted into the module hole 40a and the terminal hole 30a. The venting hole stud 400 has a stud hole 400a passing through central portions of the base portion 410 and the inserted portion 420 in the height direction (direction parallel to the Z-axis). The stud hole 400a communicates with the module hole 40a and the terminal hole 30a. Also, the stud hole 400a communicates with the bracket hole 300a. That is, the plurality of venting hole studs 400 are respectively located at positions corresponding to the plurality of bracket holes 300a.

Among the plurality of venting hole studs 400, the venting hole stud 400 inserted into the module hole 40a formed in any one battery module 100 of a pair of adjacent battery modules 100 and the venting hole stud 400 inserted into the module hole 40a formed in the other battery module 100 of the pair of adjacent battery modules 100 are electrically connected to each other. For example, a connector 500 having a metal bar shape may be used to electrically connect a pair of adjacent venting hole studs 400. The connector 500 may be integrally formed with the pair of venting hole studs 400. The reason why a pair of adjacent venting hole studs 400 are electrically connected to each other is to connect adjacent battery modules 100 in series. Among the plurality of venting hole studs 400 spaced apart from one another in a longitudinal direction of the fluid passage bracket 300 (direction parallel to the Y direction), a pair of outermost venting hole studs 400 on both outermost sides respectively function as a positive electrode terminal and a negative electrode terminal of the battery pack, and the remaining venting hole studs 400 function as connecting bars for connecting the plurality of battery module 100.

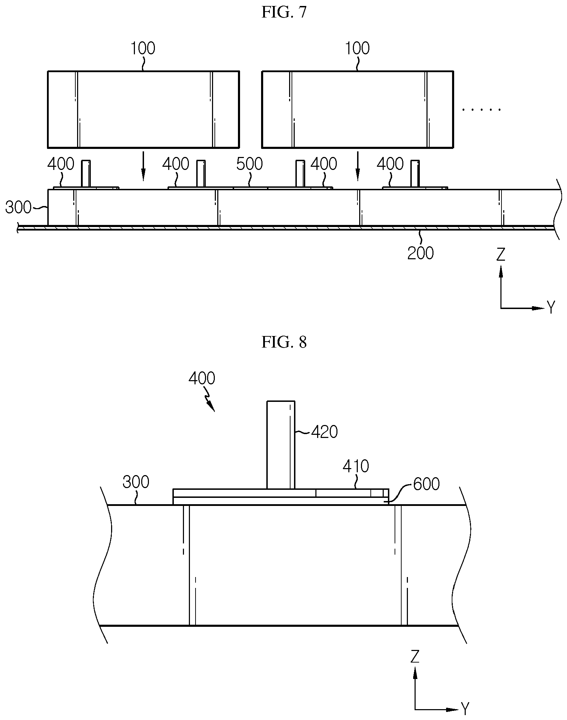

Referring to FIG. 8, an insulating member 600 may be located between the base portion 410 of the venting hole stud 400 and a top surface of the fluid passage bracket 300. This is to prevent, when the fluid passage bracket 300 is formed of a metal material to ensure rigidity, electric current from flowing through the plurality of venting hole studs 400 formed of a conductive metal material. The insulating member 600 may be, for example, coated on a surface of the fluid passage bracket 300 formed of a conductive material. When the fluid passage bracket 300 is formed of a non-conductive material, the insulating member 600 may be omitted.

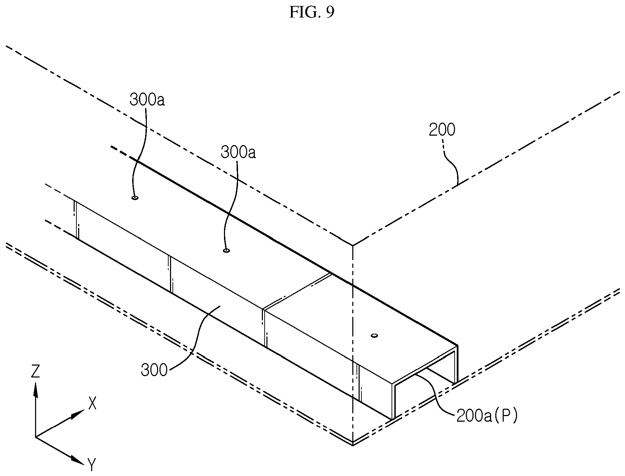

Referring to FIG. 9, one end portion and/or the other end portion of the fluid passage bracket 300 in the longitudinal direction may be closely attached to a side wall of the pack housing 200 in which the pack hole 200a is formed, and may communicate with the pack hole 200a. As such, when the venting gas fluid passage P formed in the fluid passage bracket 300 and the pack hole 200a directly communicate with each other, high-temperature venting gas may be rapidly discharged to the outside without contacting the battery module 100 other than the battery module 100 in which abnormality occurs and gas is discharged, thereby improving safety in the use of the battery pack.

A vehicle according to an embodiment of the present disclosure includes the battery module 100 and/or the battery pack according to an embodiment of the present disclosure as described above as a power source.

As described above, because the battery module 100 according to an embodiment of the present disclosure includes the venting hole terminal 30, and the battery pack according to an embodiment of the present disclosure includes the stud hole 400a, mounting and electrical connection of the plurality of battery modules 100 to manufacture the battery pack, and formation of a fluid passage for discharging venting gas may be simultaneously performed. Also, in the battery module 100 according to an embodiment of the present disclosure, because the venting hole terminal 30 functioning as a module terminal is located in a direction substantially perpendicular to a direction in which the electrode lead 11 is drawn out, the risk of an event caused by high-temperature venting gas during venting of the battery cell 10 may be minimized. That is, because the venting hole terminal 30 of the present disclosure functions as a high-potential terminal of the battery module 100, and the high-potential terminal on which heat may be concentrated is not located in a direction in which high-temperature venting gas is discharged, safety in the use of the battery module 100 may be improved.

The present disclosure has been described in detail. However, it should be understood that the detailed description and specific examples, while indicating preferred embodiments of the present disclosure, are given by way of illustration only, since various changes and modifications within the scope of the present disclosure defined by the appended claims will become apparent to one of ordinary skill in the art from this detailed description.

## Claims

1. A battery module comprising: a cell stack comprising a plurality of battery cells that are electrically connected to one another;
a module housing accommodating the cell stack therein and comprising a pair of module holes formed in one surface; and
a pair of venting hole terminals each comprising terminal hole communicating with the module hole, and electrically connected to the cell stack.

2. The battery module of claim 1, wherein
one of the pair of venting hole terminals is connected to a first electrode of the cell stack, and
the remaining one of the pair of venting hole terminals is connected to a second electrode of the cell stack.

3. The battery module of claim 2, wherein
the first electrode and the second electrode have different polarities.

4. The battery module of claim 1, wherein
each of the pair of venting hole terminals comprises
a conductive elastic member fixed to an inner circumferential surface of the terminal hole.

5. The battery module of claim 1,
further comprising
a bus bar frame configured to connect the plurality of battery cells of the cell stack in series, in parallel, or in a combination of the two.

6. A battery pack comprising: a module assembly comprising a plurality of battery modules each comprising a cell stack comprising a plurality of battery cells that are electrically connected to one another, a module housing accommodating the cell stack therein and comprising a pair of module holes formed in one surface, and a pair of venting hole terminals each comprising terminal hole communicating with the module hole and electrically connected to the cell stack;
a pack housing accommodating the module assembly therein and comprising at least one pack hole communicating with a receiving space of the module assembly;
a fluid passage bracket fixed to one surface of an inner receiving space of the pack housing; and
a plurality of venting hole studs each fixed to the fluid passage bracket and inserted into the module hole and the terminal hole.

7. The battery pack of claim 6, wherein
each of the plurality of venting hole studs comprises
a stud hole communicating with the module hole and the terminal hole.

8. The battery pack of claim 7, wherein
the fluid passage bracket comprises
a plurality of bracket holes each communicating with the stud hole.

9. The battery pack of claim 8, wherein
the fluid passage bracket comprises a venting gas fluid passage formed in a longitudinal direction,
wherein the venting gas fluid passage communicates with each of the plurality of bracket holes.

10. The battery pack of claim 9, wherein
the venting gas fluid passage communicates with the pack hole.

11. The battery pack of claim 6, wherein
an insulating member is located between the plurality of venting hole studs and the fluid passage bracket.

12. A vehicle comprising the battery module according to any one of claims 1 through 5 or the battery pack according to any one of claims 6 through 11.
